# EUROPEAN PATENT APPLICATION

(11) **EP 4 794 280 A1**
(43) Date of publication of application: **19.08.2026**
(21) Application number: 26158083.1
(22) Date of filing: 12.02.2026
(51) Int. Cl.: H04L 27/26

(54) **APPARATUS AND METHOD FOR ORTHOGONAL FREQUENCY-DIVISION MULTIPLEXING**

(30) Priority: 14.02.2025 FI 20255123
(71) Applicant: Nokia Solutions and Networks Oy, 02610 Espoo (FI)
(72) Inventor: YLI-KAAKINEN, Juha, Tampere (FI); TERVO, Oskari, Oulu (FI); TIIROLA, Esa Tapani, Oulu (FI); MIKKONEN, Jukka Tuomas, Oulu (FI); TOLONEN, Teemu Sakari, Oulu (FI)
(74) Representative: Nokia EPO representatives

(57) **Abstract**

An apparatus and a method for orthogonal frequency-division multiplexing (OFDM), wherein a first OFDM symbol (202) comprises a first part at a beginning of the first OFDM symbol (202) and a last part at an end of the first OFDM symbol (202), wherein a second OFDM symbol (204) comprises a first part at a beginning of the second OFDM symbol (204) and a last part at an end of the second OFDM symbol (204), wherein the method comprises choosing samples from the last part of the first OFDM symbol (202) and the first part of the second OFDM symbol (204), converting the samples (202, 204) into frequency-domain samples, multiplying the frequency-domain samples by a frequency-domain window to determine windowed samples in the frequency domain, converting the windowed samples in the frequency domain into time-domain samples in the time domain, multiplying the time-domain samples with a time-domain window (400) to determine samples for a boundary, multiplying the time-domain samples with a complementary window (402) of the time-domain window (400) to determine complementary-windowed time-domain samples, determining a result of overlapping the complementary-windowed time domain-samples and the samples and adding the complementary-windowed time-domain samples and the samples in the boundary.

## Description

### Field of the invention

Various examples relate to apparatuses and methods for orthogonal frequency-division multiplexing (OFDM).

### Background

Wireless communications systems may use OFDM for physical layer waveform processing. The spectral emissions of OFDM waveforms need to be constrained to meet defined spectrum emission masks.

Exemplary OFDM waveforms are cyclic-prefix OFDM (CP-OFDM), cyclic-prefix discrete Fourier transform spread OFDM (CP-DFT-s-OFDM), CP-DFT-s-OFDM with FDSS (frequency domain spectrum shaping), CP-DFT-s-OFDM with FDSS-SE (spectrum extension), cyclic-prefix less OFDM and cyclic-prefix less discrete Fourier transform spread OFDM (DFT-s-OFDM).

### Summary

Some examples relate to a method for orthogonal frequency-division multiplexing (OFDM), wherein a first OFDM symbol comprises a first part at a beginning of the first OFDM symbol and a last part at an end of the first OFDM symbol, wherein a second OFDM symbol comprises a first part at a beginning of the second OFDM symbol and a last part at an end of the second OFDM symbol, wherein the method comprises choosing samples in the time domain from the last part of the first OFDM symbol and the first part of the second OFDM symbol, converting the samples into frequency-domain samples, multiplying the frequency-domain samples by a frequency-domain window to determine windowed samples in the frequency domain, converting the windowed samples in the frequency domain into time-domain samples in the time domain, multiplying the time-domain samples with a time-domain window to determine samples for a boundary, multiplying the time-domain samples with a complementary window of the time-domain window to determine complementary-windowed time-domain samples, determining a result of overlapping the complementary-windowed time domain-samples and the samples and adding the complementary-windowed time domain-samples and the samples in the boundary.

In some examples, choosing the samples comprises taking half of the samples from the end of the first symbol and half of the samples from the beginning of the second symbol.

In some examples, the second symbol comprises a prefix at the beginning of the second symbol, wherein choosing the samples comprises taking at least a part of the samples from the beginning of the second symbol from the prefix.

In some examples, choosing the samples comprises taking the samples from the beginning of the second symbol from the prefix.

In some examples, choosing the samples comprises taking the samples from the beginning of the second symbol from the prefix and from a subsequent part of the second symbol outside of the prefix.

In some examples, converting the samples into frequency-domain samples comprises converting the samples into frequency-domain samples by fast Fourier transformation (FFT).

In some examples, converting the windowed samples in the frequency domain into time-domain samples in the time domain comprises converting the windowed samples into time-domain samples by inverse fast Fourier transformation (IFFT).

In some examples, multiplying the frequency-domain samples by the frequency-domain window to determine windowed samples comprises defining the frequency-domain window in multiple overlapping segments, multiplying the frequency-domain samples individually by the segments to determine windowed blocks, and overlapping and adding or overlapping and saving the windowed blocks to compose the windowed samples in the frequency domain.

In some examples, multiplying the time-domain samples with the time-domain window comprises providing the time-domain window with two symmetric transitions between an earliest sample of the time-domain window and a center of the time-domain window and the center of the time-domain window and a latest sample of the time-window.

In some examples, a first number of samples of the first OFDM symbol preceding the last part of the first OFDM symbol in the time domain, and a second number of samples following the first part of the second OFDM symbol in the time domain, remain unprocessed when choosing samples from the OFDM symbols, converting the samples into frequency-domain samples, multiplying the frequency-domain samples by the frequency-domain window, to determine the windowed samples in the frequency domain, converting the windowed samples in the frequency domain into the time-domain samples in the time domain, multiplying the time-domain samples with the time-domain window to determine the samples for the boundary, multiplying the time-domain samples with the complementary window of the time-domain window to determine complementary-windowed time-domain samples, and determining the result of overlapping and adding the complementary-windowed time-domain samples and the samples for the boundary.

Some examples relate to an apparatus for orthogonal frequency-division multiplexing (OFDM), wherein the apparatus is configured for executing the method.

In some examples, the apparatus comprises means for executing the method.

An apparatus for orthogonal frequency-division multiplexing (OFDM), wherein a first OFDM symbol comprises a first part at a beginning of the first OFDM symbol and a last part at an end of the first OFDM symbol, wherein a second OFDM symbol comprises a first part at a beginning of the second OFDM symbol and a last part at an end of the second OFDM symbol, the apparatus comprising:
at least one processor; and
at least one memory storing instructions that, when executed by the at least one processor, cause the apparatus at least to perform:
   choosing samples in the time domain from the last part of the first OFDM symbol and the first part of the second OFDM symbol, converting the samples into frequency-domain samples, multiplying the frequency-domain samples by a frequency-domain window to determine windowed samples in the frequency domain, converting the windowed samples in the frequency domain into time-domain samples in the time domain, multiplying the time-domain samples with a time-domain window to determine samples for a boundary, multiplying the time-domain samples with a complementary window of the time-domain window to determine complementary-windowed time-domain samples, determining a result of overlapping the complementary-windowed time domain-samples and the samples and adding the complementary-windowed time domain-samples and the samples in the boundary.

According to some examples, the instructions, when executed by the at least one processor, cause that choosing the samples comprises taking half of the samples from the end of the first OFDM symbol and half of the samples from the beginning of the second OFDM symbol.

According to some examples, the second OFDM symbol comprises a prefix at the beginning of the second OFDM symbol, wherein the instructions, when executed by the at least one processor, cause that choosing the samples comprises taking at least a part of the samples from the beginning of the second OFDM symbol from the prefix.

According to some examples, the instructions, when executed by the at least one processor, cause that choosing the samples comprises taking the samples from the beginning of the second OFDM symbol from the prefix.

According to some examples, the instructions, when executed by the at least one processor, cause that choosing the samples comprises taking the samples from the beginning of the second OFDM symbol from the prefix and from a subsequent part of the second OFDM symbol outside of the prefix.

According to some examples, the instructions, when executed by the at least one processor, cause that converting the samples into frequency-domain samples comprises converting the samples into frequency-domain samples by fast Fourier transformation (FFT).

According to some examples, the instructions, when executed by the at least one processor, cause that converting the windowed samples in the frequency domain into time-domain samples in the time domain comprises converting the windowed samples into time-domain samples by inverse fast Fourier transformation (IFFT).

According to some examples, the instructions, when executed by the at least one processor, cause that multiplying the frequency-domain samples by the frequency-domain window to determine windowed samples comprises defining the frequency-domain window in multiple overlapping segments, multiplying the frequency-domain samples individually by the segments to determine windowed blocks, and overlapping and adding or overlapping and saving the windowed blocks to compose the windowed samples in the frequency domain.

According to some examples, the instructions, when executed by the at least one processor, cause that multiplying the time-domain samples with the time-domain window comprises providing the time-domain window with two symmetric transitions between an earliest sample of the time-domain window and a center of the time-domain window and the center of the time-domain window and a latest sample of the time-domain window.

According to some examples, the instructions, when executed by the at least one processor, cause that a first number of samples of the first OFDM symbol preceding the last part of the first OFDM symbol in the time domain, and a second number of samples following the first part of the second OFDM symbol in the time domain, remain unprocessed when choosing samples from the OFDM symbols, wherein the instructions, when executed by the at least one processor, cause the apparatus to perform: converting the samples into frequency-domain samples, multiplying the frequency-domain samples by the frequency-domain window to determine the windowed samples in the frequency domain, converting the windowed samples in the frequency domain into the time-domain samples in the time domain, multiplying the time-domain samples with the time-domain window to determine the samples for the boundary, multiplying the time-domain samples with the complementary window of the time-domain window to determine complementary-windowed time-domain samples, and determining the result of overlapping and adding the complementary-windowed time domain-samples and the samples for the boundary.

In some examples, the apparatus is a user equipment (UE) or a base station, for example a next generation node B (gNB).

### Brief description of the figures

Fig. 1 schematically depicts an apparatus for orthogonal frequency-division multiplexing,
Fig. 2 schematically depicts two exemplary symbols,
Fig. 3 schematically depicts an exemplary frequency-domain window,
Fig. 4 schematically depicts an exemplary time-domain window and an exemplary complementary window,
Fig. 5 schematically depicts an exemplary boundary,
Fig. 6 schematically depicts exemplary samples of the two exemplary symbols complementary-windowed by the exemplary complementary window,
Fig. 7 schematically depicts the result of overlapping and adding the complementary-windowed exemplary samples and the exemplary boundary,
Fig. 8 depicts a flow chart comprising steps of a method for orthogonal frequency-division multiplexing.

### Description of the embodiments

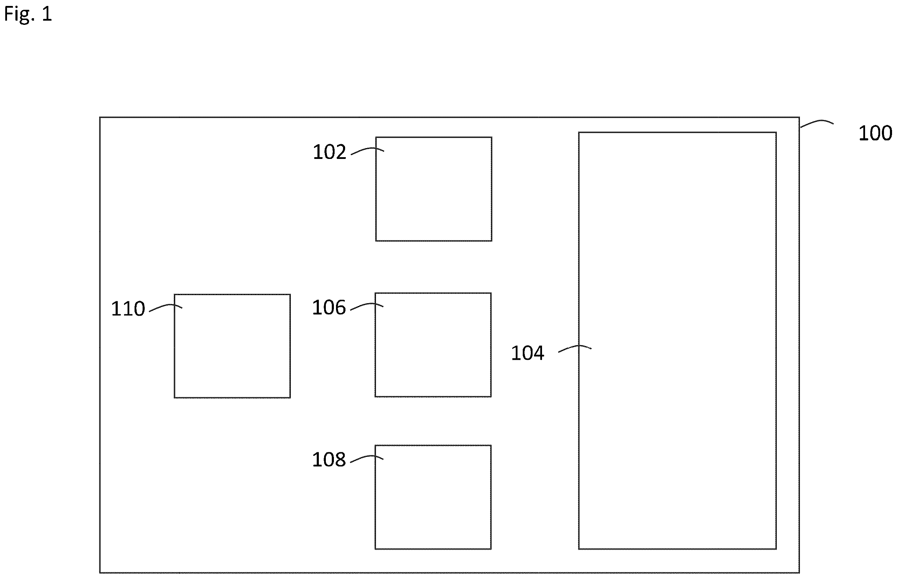

Figure 1 schematically depicts an apparatus 100 for OFDM.

The apparatus 100 is configured for processing OFDM symbols consecutively.

The apparatus 100 is described by way of example of a first CP-OFDM symbol n-1 and a second CP-OFDM symbol n.

The apparatus 100 comprises a means, in particular a first processor 102, that is configured for determining a fast Fourier transformation (FFT) of samples that are sampled from two consecutively processed symbols to determine frequency-domain samples.

The apparatus may comprise storage 104 that is configured for storing the frequency-domain samples.

The apparatus 100 comprises a means, in particular a second processor 106, that is configured for multiplying the frequency-domain samples by a frequency-domain window *w_{FD}* to determine windowed samples in the frequency domain.

The storage 104 may be configured for storing the windowed samples in the frequency domain.

The storage 104 may be configured for storing the frequency-domain window *w_{FD}.*

The apparatus 100 comprises a means, in particular a third processor 108, that is configured for determining an inverse fast Fourier transformation (IFFT) of the windowed samples to time-domain samples in the time domain.

The storage 104 may be configured for storing the time-domain samples.

The apparatus 100 comprises a means that is configured for windowing the time-domain samples with a time-domain window *w_{TD}* to determine samples for a boundary between two consecutive OFDM symbols. The means that is configured for windowing the time-domain samples with the time-domain window *w_{TD}* to determine the samples for the boundary between the two consecutive OFDM symbols may be the second processor 106 or another processor.

The storage 104 may be configured for storing the samples for the boundary.

The storage 104 may be configured for storing the time-domain window *w_{TD}.*

The apparatus 100 comprises a means that is configured for windowing the time-domain samples with a complementary window 1 - *w_{TD}* of the time-domain window *w_{TD}* to determine complementary-windowed time-domain samples. The means that is configured for windowing the time-domain samples with the complementary window 1 - *w_{TD}* to determine the complementary-windowed time-domain samples may be the second processor 106 or another processor.

The storage 104 may be configured for storing the complementary-windowed time-domain samples.

The storage 104 may be configured for storing the complementary window 1 - *w_{TD}.*

The apparatus 100 comprises a means that is configured for determining a result of overlapping and adding the complementary-windowed time-domain samples and the samples for the boundary. The means that is configured for determining the result of overlapping and adding the complementary-windowed time-domain samples and the samples for the boundary may be the second processor 106 or another processor.

The storage 104 may be configured for storing the result.

The means that is configured for determining the result of overlapping and adding the complementary-windowed time-domain samples and the samples for the boundary may be configured to maintain the samples of the first CP-OFDM symbol n-1 and a second CP-OFDM symbol n that are outside the boundary unchanged in the result.

The time-domain window and the complementary window may extend from a first sample of the samples of the first CP-OFDM symbol n-1 to a last sample of the second CP-OFDM symbol n, wherein the time-domain window and the complementary window comprise weights for the samples outside the boundary that leave the samples of the first CP-OFDM symbol n-1 and a second CP-OFDM symbol n that are outside the boundary unchanged in the result. The time-domain window for example weights the samples from the first sample of the samples of the first CP-OFDM symbol n-1 to the last sample of the second CP-OFDM symbol n outside the boundary with One. The complementary window for example weights the samples from the first sample of the samples of the first CP-OFDM symbol n-1 to the last sample of the second CP-OFDM symbol n outside the boundary with Zero.

The apparatus 100 may comprise a means, in particular a digital-to-analog-converter 110 that is configured for converting the result to at least a part of a signal for sending the symbols.

According to some examples, a first number of samples of the first OFDM symbol n-1 preceding the last part of the first OFDM symbol n-1 in the time domain, and a second number of samples following the first part of the second OFDM symbol n in the time domain remain unprocessed when determining the result. The apparatus 100 may be configured accordingly.

According to some examples, the apparatus 100 is a user equipment (UE) or a base station, for example a next generation node B (gNB).

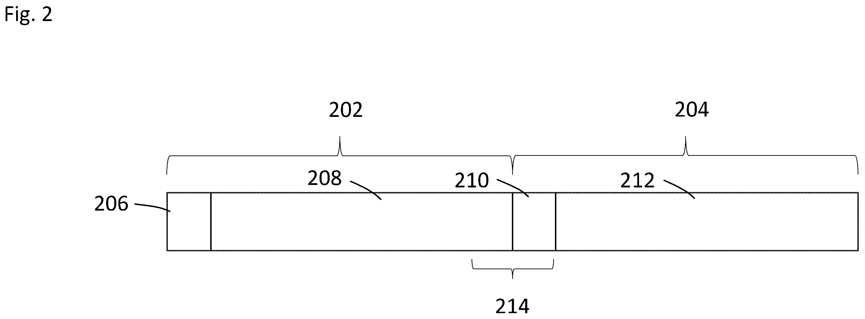

Figure 2 schematically depicts a first exemplary symbol 202 and a second exemplary symbol 204. According to an example, the first exemplary symbol 202 is the first CP-OFDM symbol n-1. According to an example, the second exemplary symbol 204 is the second CP-OFDM symbol n. The first OFDM symbol 202 comprises a first part at a beginning of the first OFDM symbol 202 and a last part at an end of the first OFDM symbol 202. The second OFDM symbol 204 comprises a first part at a beginning of the second OFDM symbol 204 and a last part at an end of the second OFDM symbol 204.

The first CP-OFDM symbol 202 comprises a first cyclic prefix 206 and first payload data 208, the second CP-OFDM symbol has a second cyclic prefix 210 and second payload data 212.

Figure 2 depicts a boundary 214.

According to an example, the boundary 214 comprises the second cyclic prefix 210 and a part of the first payload data 208 from the end of the first CP-OFDM symbol 202. According to an example, the part of first payload data at the end of the first CP-OFDM symbol 202 is of the same length as the second cyclic prefix 210.

The boundary 214 may, in addition to the second cyclic prefix 210, comprise a part of the second payload data 212 from the beginning of the second payload data 212. According to an example, the part of the first payload data 208 is of the same length as the second cyclic prefix 210 and the part of second payload data 212 together.

The boundary 214 may, instead of comprising the entire second cyclic prefix 210, comprise a part of the second cyclic prefix 210. According to an example, the part of first payload data 208 from the end of the first CP-OFDM symbol 202 is of the same length as the part of the second cyclic prefix 210.

A part of the first CP-OFDM symbol 202 and a part of the second CP-OFDM symbol 204 remain outside the boundary 214.

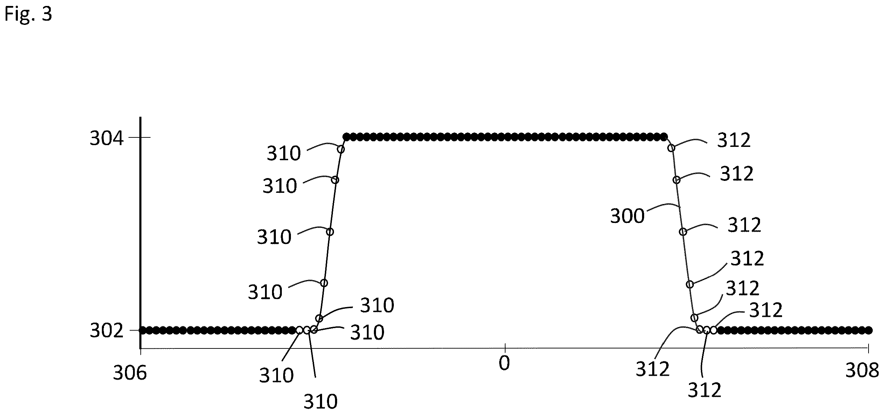

Figure 3 schematically depicts an exemplary frequency-domain window 300 for the 5 MHz channel.

The exemplary frequency-domain window 300 comprises weights between a low weight 302 and a high weight 304. The low weight 302 is for example Zero. The high weight 304 is for example One.

According to an example, the exemplary frequency-domain window 300 provides weights for an amount P of samples. The weights are provided for example from a weight for a first sample having a first sample index 306 to a weight for a last sample having a last sample index 308.

According to an example, the low weight 302 is provided for the first sample. According to an example, the low weight 302 is provided for the last sample. Between the weights for the first sample and for the last sample, the high weight 304 is provided for at least one sample having a sample index between the first sample index and the last sample index.

According to an example, increasing transition weights 310 are provided in a transition of the exemplary frequency domain window 300 from the low weight 302 to the high weight 304.

According to an example, decreasing transition weights 312 are provided in a transition of the exemplary frequency domain window 300 from the high weight 304 to the low weight 304.

For example, eight increasing transition weights 310 and eight decreasing transition weights 312 are used.

According to some examples, the IFFT size is defined to be power of 2.

According to an example wherein the amount of P = 128 samples are used with an OFDM IFFT size of L_OFDM = 512 and a channel bandwidth is *f_{CBW}* = 5.0×10^6 Hz, the number of low weights 302 before the eight increasing transition weights is a = 128/2-42+8 = 30, the number of low weights 302 after the eight decreasing transition weights is b = 128/2-42-1+8 = 29, the number of high weights 304 is c = P-2×8-30-29 = 53, and the total length of the exemplary frequency-domain window 300 is L = 30+29+53+2×8 = 128 = P.

The disclosure is not limited to the exemplary frequency-domain window 300. The frequency-domain window 300 may be defined by other means as well.

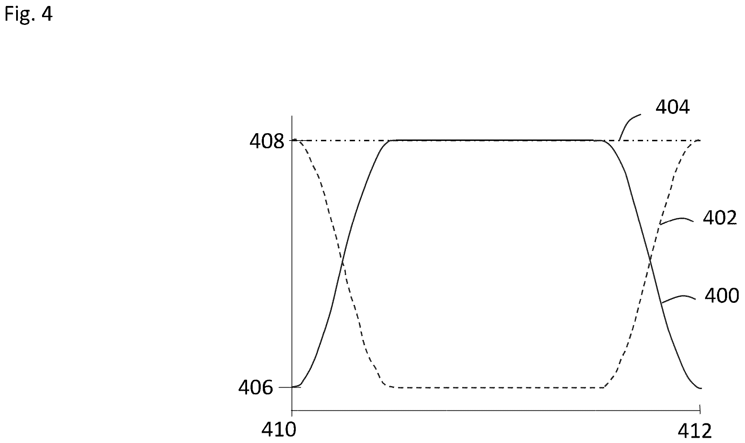

Figure 4 schematically depicts an exemplary time-domain window 400 as solid line and an exemplary complementary window 402 of the exemplary time-domain window 400 as dashed line. A sum window 404 of the sum of the time-domain window 400 and the complementary window 402 is depicted as dash-dotted line.

The disclosure is not limited to the exemplary time-domain window 400. The time-domain window 400 may be defined by other means as well.

According to an example, the exemplary time-domain window 400 is defined analytically. According to an example, the exemplary time-domain window 400 has values V between a low value 406 and a high value 408. According to an example, the low value 406 is Zero. According to an example, the high value 408 is One. The exemplary time-domain window 400 depicted in Figure 4 is derived from a Hann window by extending the Hann window in the middle by high values 408. According to an example, the exemplary time-domain window 400 has length 128 samples, wherein the Hann window of length 64 is extended by 64 one-valued samples in the middle.

The time-domain window *w_{TD}* may instead be defined by using another window with magnitude complementary property, e.g., Hann, triangular, trapezoidal, or rectangular. The time-domain window *w_{TD}* may be of length 128 samples.

Figure 4 schematically depicts the exemplary time-domain window 400 and the complementary window 402 in the exemplary boundary 214.

The exemplary time-domain window 400 comprises a value for an earliest sample 410 for the beginning of the boundary 214 and a value for a latest sample 412 for the end of the boundary 214. The exemplary time-domain window 400 is for example axially symmetric with respect to a center line. The center line is for example centered with respect to a center, in particular a center of the boundary 214. The exemplary time-domain window 400 for example has a transition length of Q samples between the earliest sample 410 and the center. The exemplary time-domain window 400 for example has a transition length of Q samples between the center and the latest sample 412.

According to an example, the values of the exemplary complementary window 402 are determined from the values V of the exemplary time-domain window 400 for example as 1-V.

According to an example, the values of the exemplary complementary window 402 are determined from the values V of the exemplary time-domain window 400 in the boundary 214.

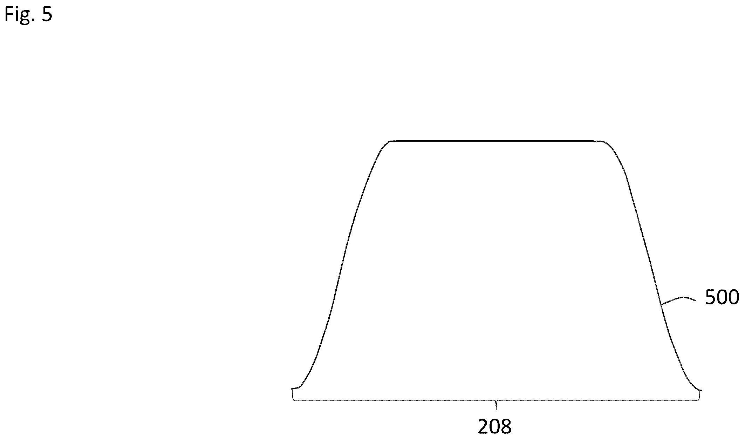

Figure 5 schematically depicts an exemplary boundary 500 comprising the time-domain samples resulting from multiplying the time-domain samples with the time-domain window 400.

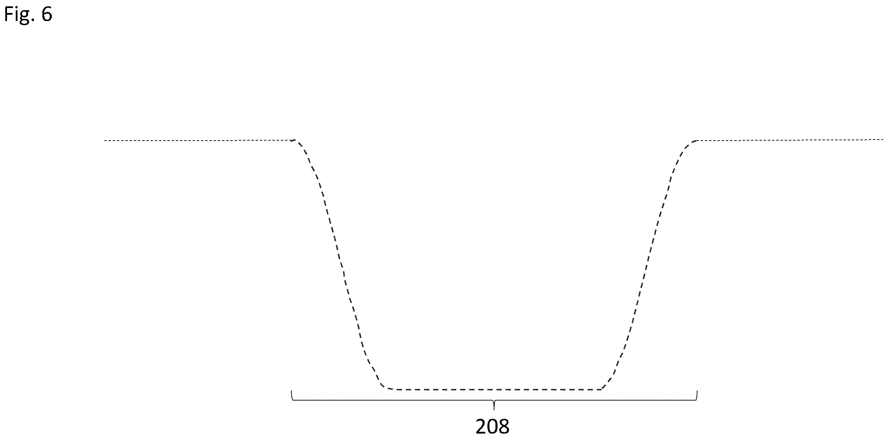

Figure 6 schematically depicts exemplary samples 600 of the two exemplary symbols complementary-windowed by the exemplary complementary window 402. The exemplary complementary window 402 changes the samples inside the boundary 214. The samples outside of the boundary 214 remain unchanged.

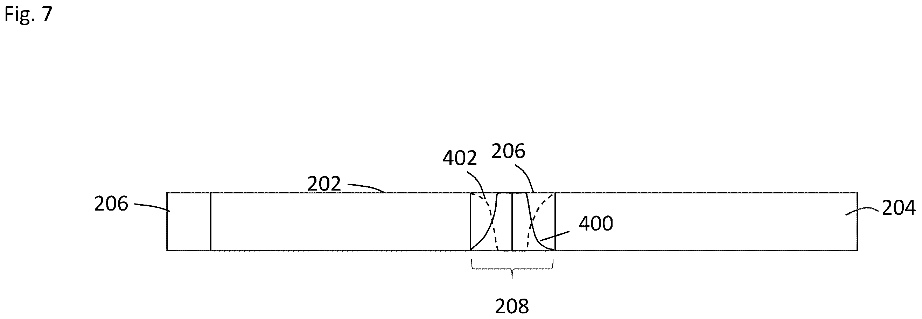

Figure 7 schematically depicts the result of overlapping and adding the exemplary samples and the samples for the exemplary boundary 500. The time-domain window 400 and the complementary window 402 changed the samples inside the boundary 214.

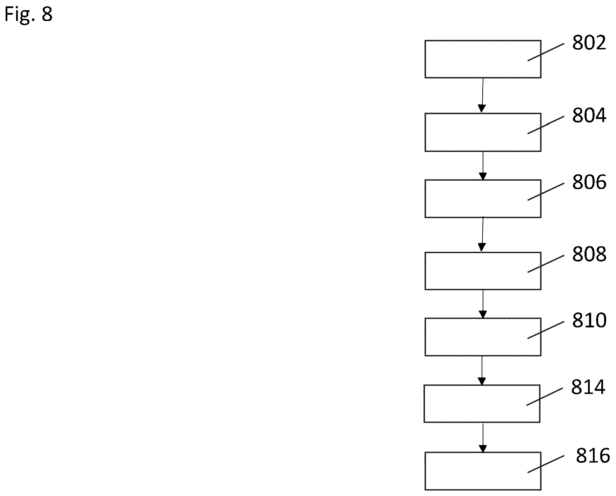

Figure 8 depicts a flow chart comprising steps of a method for orthogonal frequency-division multiplexing.

The method comprises a step 802.

The step 802 comprises choosing samples from the boundary 214. According to an example, the step 802 comprises choosing P samples from the boundary 214.

For example, first P/2 samples are taken from the end of the first CP-OFDM symbol n-1 and last P/2 samples are taken from the beginning of the second CP-OFDM symbol n.

The selection of P may be based on an attenuation requirement, a transition-band width requirement, complexity requirement, and/or an allowable error vector magnitude (EVM) requirement. P may be defined iteratively by evaluating the power spectral density and EVM for each, e.g., power of two value of P and then selecting the smallest P meeting the given requirements.

The method comprises a step 804.

The step 804 comprises converting the samples into frequency-domain samples. According to an example, the step 804 comprises converting the P samples into frequency-domain samples by FFT of size P.

The method comprises a step 806.

The step 806 comprises multiplying the frequency-domain samples by the frequency-domain window *w_{FD}* to determine the windowed samples in the frequency domain. According to an example, the step 806 comprises multiplying the frequency-domain samples by the exemplary frequency-domain window 300 of length P to determine the windowed samples in the frequency domain.

For cases when very high selectivity and, therefore, long filters are needed, it may be beneficial to define the frequency-domain window *w_{FD}* in multiple overlapping segments. For example, the frequency-domain window *w_{FD}* may be generated, e.g., in T overlapping segments. A frequency-domain window matrix of size P×T may comprise the frequency-domain window *W_{FD}.*

The step 806 may comprise multiplying the frequency-domain samples individually by the T segments to determine T windowed blocks. The step 806 may comprise multiplying a vector comprising the frequency-domain samples by the frequency-domain window matrix *w_{FD}* to determine the T windowed blocks.

The step 806 may comprise overlapping and adding or overlapping and saving the T windowed blocks to compose the windowed samples in the frequency domain.

By using this approach, longer filter lengths for given P or shorter P for given filter length may be used resulting into some implementation benefits and more flexibility in defining the filter lengths.

The method comprises a step 808.

The step 808 comprises converting the windowed samples in the frequency domain into time-domain samples in the time domain.

According to an example, the step 808 comprises determining the IFFT of the length P of the windowed samples to the time-domain samples in the time domain.

The method comprises a step 810.

The step 810 comprises multiplying the time-domain samples with the time-domain window *w_{TD}* to determine the samples for the boundary. According to an example, the step 810 comprises multiplying the time-domain samples with the exemplary time-domain window 400 to determine the samples for the exemplary boundary 500. The exemplary time-window 400 has the transition length of Q samples between the earliest sample 410 and the center. The exemplary time-window 400 has the transition length of Q samples between the center and the latest sample 412.

The time-domain window *w_{TD}* for example consist of two symmetric transitions of length Q≤ P/2 and P-2Q ones between the transitions such that the window length is P.

The method comprises a step 812.

The step 812 comprises multiplying the time-domain samples with the complementary window 1-*w_{TD}* of the time-domain window *w_{TD}* to determine the complementary-windowed time-domain samples.

The method comprises a step 814.

The step 814 comprises determining the result of overlapping and adding the complementary-windowed time-domain samples and the samples for the boundary. According to an example, the step 814 comprises determining the result of overlapping and adding the complementary-windowed time domain-samples and the samples for the exemplary boundary 500.

According to an example for OFDM, the symbols are OFDM waveforms and the result comprises the spectrally localized OFDM waveform in the boundary 214. According to an example for DFT-s OFDM, the symbols are DFT-s OFDM waveforms and, the result comprises the spectrally localized DFT-s OFDM waveform in the boundary 214.

The result is determined for digital-to-analog-converting the result to the signal for sending the symbols.

The method may comprise a step 816.

The step 816 comprises digital-to-analog-converting the result to the signal for sending the symbols.

The disclosure is not limited to FFT or IFFT. Other discrete trigonometric transforms (DTT) preserving the convolution theorem may be used instead of FFT/IFFT as well.

The frequency-domain window *w_{FD}* may be defined with a time-domain approach.

The frequency-domain window *w_{FD}* may be defined with a frequency-domain approach.

### Time-domain approach:

The time-domain approach uses a time-domain finite-impulse response (FIR) filter design algorithm or a windowing approach.

According to an example, the time-domain FIR filter design algorithm is the Parks-McClellan algorithm. The Parks-McClellan algorithm is described for example in Section 4.8.1 in T. Saramäki, "Finite impulse response filter design," in Handbook for Digital Signal processing, Edited by S. K. Mitra and J. F. Kaiser, Chapter 4, pp. 155-277, John Wiley & Sons, 1993.

According to the windowing approach, a normalized passband frequency *ωₚ* and a stopband edge frequency *ωₛ* of the FIR filter are defined as ${ω}_{p} = \left(\left(12{N}_{RB}+{N}_{ext}\right){f}_{SCS}\right) / {f}_{s}$ ${ω}_{s} = {f}_{CBW} / {f}_{s}$ respectively. Here, *N_{RB}* is the transmission bandwidth (TBW) in resource blocks (RBs), *Nₑₓₜ* is the passband extension in subcarriers, *f_{SCS}* is the subcarrier spacing, f_s is the sample rate, and *f_{CBW}* is the channel bandwidth.

The EVM performance of the resulting waveform may be improved by using passband extension of few of subcarriers.

The normalized passband frequency *ωₚ* and the stopband edge frequency *ωₛ* are used as an input to the time-domain FIR filter design algorithm to determine impulse response coefficient values.

According to the windowing approach, the impulse response coefficient values resulting from the input are converted into frequency domain and used as the frequency-domain window *w_{FD}.*

### Frequency-domain approach:

According to the frequency-domain approach, the frequency-domain window *w_{FD}* may be defined using single set of transition band weights with N non-trivial weight values ${w}_{TB} = \left[\begin{matrix}{w}_{1} \\ {w}_{2} \\ … \\ {w}_{N}\end{matrix}\right]$

The frequency-domain window *w_{FD}* is defined as ${w}_{FD} = \left[\begin{matrix}{0}_{a} \\ {w}_{TB} \\ {1}_{c} \\ {J}_{N} {w}_{TB} \\ {0}_{b}\end{matrix}\right]$

Here, 0*_{q}* and 1*_{q}* are the q×1 vectors of all zeros and ones, respectively, while *J_{N}* is the reverse identity matrix of size N.

The lengths of vectors of zeros and ones is for example defined as $a = P / 2 + \left⌊-\left({μf}_{CBW}/\left(2{f}_{SCS}\right)\right.\right⌋ + {N}_{ext}$ $b = P / 2 - \left⌈\left({μf}_{CBW}/\left(2{f}_{SCS}\right)\right.\right⌉ - 1 + {N}_{ext}$ $c = P - 2 N - a - b$

In this case, the number of zeros *a* before the center, and the number of zeros b after the center are extended by *N*ₑₓₜ samples.

The SCS spacing factor µ is the ratio of OFDM transform size and P. In this case, the TBW may be simply adjusted by adjusting the ones between the transition bands. Same transition-band weights could be used for all TBWs. The transition-band weight may be defined based on numerical optimization or by using analytical weights, e.g., based on the Hann window.

The apparatus 100 may comprise at least one memory storing instructions that, when executed by at least one processor of the apparatus, cause the apparatus 100 to perform at least a part of the steps of the method. The storage 104 may comprise the at least one memory.

## Claims

1. A method for orthogonal frequency-division multiplexing (OFDM), wherein a first OFDM symbol (202) comprises a first part at a beginning of the first OFDM symbol (202) and a last part at an end of the first OFDM symbol (202), wherein a second OFDM symbol (204) comprises a first part at a beginning of the second OFDM symbol (204) and a last part at an end of the second OFDM symbol (204), wherein the method comprises choosing (802) samples in the time domain from the last part of the first OFDM symbol (202) and the first part of the second OFDM symbol (204), converting (804) the samples into frequency-domain samples, multiplying (806) the frequency-domain samples by a frequency-domain window (300) to determine windowed samples in the frequency domain, converting (808) the windowed samples in the frequency domain into time-domain samples in the time domain, multiplying (810) the time-domain samples with a time-domain window (400) to determine samples for a boundary (214), multiplying (812) the time-domain samples with a complementary window (402) of the time-domain window (400) to determine complementary-windowed time-domain samples, determining a result of overlapping the complementary-windowed time domain-samples and the samples and adding the complementary-windowed time domain-samples and the samples in the boundary (214).

2. The method according to claim 1, wherein choosing (802) the samples comprises taking half of the samples from the end of the first OFDM symbol (202) and half of the samples from the beginning of the second OFDM symbol (204).

3. The method according to one of the preceding claims, wherein the second OFDM symbol (204) comprises a prefix (210) at the beginning of the second OFDM symbol (204), wherein choosing (802) the samples comprises taking at least a part of the samples from the beginning of the second OFDM symbol (204) from the prefix (210).

4. The method according to claim 3, wherein choosing (802) the samples comprises taking the samples from the beginning of the second OFDM symbol (204) from the prefix (210).

5. The method according to claim 3, wherein choosing (802) the samples comprises taking the samples from the beginning of the second OFDM symbol (204) from the prefix (210) and from a subsequent part of the second OFDM symbol (204) outside of the prefix (210).

6. The method according to one of the preceding claims, wherein converting (804) the samples into frequency-domain samples comprises converting the samples into frequency-domain samples by fast Fourier transformation (FFT).

7. The method according to one of the preceding claims, wherein converting (808) the windowed samples in the frequency domain into time-domain samples in the time domain comprises converting the windowed samples into time-domain samples by inverse fast Fourier transformation (IFFT).

8. The method according to one of the preceding claims, wherein multiplying (806) the frequency-domain samples by the frequency-domain window (300) to determine windowed samples comprises defining the frequency-domain window in multiple overlapping segments, multiplying the frequency-domain samples individually by the segments to determine windowed blocks, and overlapping and adding or overlapping and saving the windowed blocks to compose the windowed samples in the frequency domain.

9. The method according to one of the preceding claims, wherein multiplying (810) the time-domain samples with the time-domain window (400) comprises providing the time-domain window (400) with two symmetric transitions between an earliest sample of the time-domain window (400) and a center of the time-domain window and the center of the time-domain window (400) and a latest sample of the time-domain window (400).

10. The method according to one of the preceding claims, wherein a first number of samples of the first OFDM symbol (202) preceding the last part of the first OFDM symbol (202) in the time domain, and a second number of samples following the first part of the second OFDM symbol (204) in the time domain, remain unprocessed when choosing (802) samples from the OFDM symbols (202, 204), converting (804) the samples into frequency-domain samples, multiplying (806) the frequency-domain samples by the frequency-domain window (300), to determine the windowed samples in the frequency domain, converting (808) the windowed samples in the frequency domain into the time-domain samples in the time domain, multiplying (810) the time-domain samples with the time-domain window (400) to determine the samples for the boundary, multiplying (812) the time-domain samples with the complementary window (402) of the time-domain window (400) to determine complementary-windowed time-domain samples, and determining the result of overlapping and adding the complementary-windowed time domain-samples and the samples for the boundary.

11. An apparatus (100) for orthogonal frequency-division multiplexing (OFDM), wherein a first OFDM symbol (202) comprises a first part at a beginning of the first OFDM symbol (202) and a last part at an end of the first OFDM symbol (202), wherein a second OFDM symbol (204) comprises a first part at a beginning of the second OFDM symbol (204) and a last part at an end of the second OFDM symbol (204), the apparatus (100) comprising means for choosing samples in the time domain from the last part of the first OFDM symbol (202) and the first part of the second OFDM symbol (204), converting the samples into frequency-domain samples, multiplying the frequency-domain samples by a frequency-domain window (300) to determine windowed samples in the frequency domain, converting the windowed samples in the frequency domain into time-domain samples in the time domain, multiplying the time-domain samples with a time-domain window (400) to determine samples for a boundary (214), multiplying the time-domain samples with a complementary window (402) of the time-domain window (400) to determine complementary-windowed time-domain samples, determining a result of overlapping the complementary-windowed time domain-samples and the samples and adding the complementary-windowed time domain-samples and the samples in the boundary (214).

12. The apparatus (100) according to claim 11, wherein choosing the samples comprises taking half of the samples from the end of the first OFDM symbol (202) and half of the samples from the beginning of the second OFDM symbol (204).

13. The apparatus (100) according to one of the claims 11 or 12, wherein the second OFDM symbol (204) comprises a prefix (210) at the beginning of the second OFDM symbol (204), wherein choosing the samples comprises taking at least a part of the samples from the beginning of the second OFDM symbol (204) from the prefix (210).

14. The apparatus (100) according to claim 13, wherein choosing the samples comprises taking the samples from the beginning of the second OFDM symbol (204) from the prefix (210).

15. The apparatus (100) according to one of the claims 11 to 14, wherein the apparatus (100) is a user equipment (UE) or a base station.
